# FASCICULE DE BREVET EUROPEEN

(11) **EP 1 967 001 B1**
(45) Date de publication et mention de la délivrance du brevet: **13.02.2013**
(21) Numéro de dépôt: 06847038.4
(22) Date de dépôt: 22.12.2006
(51) Int. Cl.: H04N 7/10, G06F 3/13

(54) **SYSTEME ET PROCEDE DE TRANSMISSION VIDEO HAUT DEBIT NUMERIQUE A BORD D'UN VEHICULE**
SYSTEM UND VERFAHREN ZUR HOCHGESCHWINDIGKEITS-VIDEOÜBERTRAGUNG IN EINEM FAHRZEUG
SYSTEM AND METHOD FOR HIGH SPEED DIGITAL VIDEO TRANSMISSION ON BOARD A VEHICLE

(30) Priorité: 26.12.2005 FR 0513316
(43) Date de publication de la demande: 10.09.2008
(73) Titulaire: SAGEM DEFENSE SECURITE, 75015 Paris (FR)
(72) Inventeur: GAMBARIN, Lorenzo, F-75015 Paris (FR)
(74) Mandataire: Regimbeau
(86) Numéro de dépôt international: PCT/EP2006/070153
(87) Numéro de publication internationale: WO 2007/074140

(56) Documents cités:
- US-A- 4 486 739
- US-A- 4 847 603
- US-A- 5 420 583
- US-A- 5 974 464
- US-A- 6 058 288
- US-A1- 2004 105 503

## Description

Le domaine de l'invention est celui de la transmission numérique haut débit d'un flux d'images vidéo entre une source d'images vidéo et un équipement de visualisation d'images vidéo embarqués à bord d'un véhicule.

L'invention concerne plus particulièrement un système et un procédé permettant de transmettre un flux vidéo haut débit entre une source d'images vidéo et un équipement de visualisation déporté de la source, la source et l'équipement étant relié par une ligne de transmission vidéo.

A titre d'exemple d'équipement de visualisation embarqué à bord d'un véhicule, on peut citer les systèmes viseur de casque utilisés dans les avions de chasse ou dans les véhicules terrestres militaires de type chars. L'invention n'est toutefois pas limitée à cet exemple, et s'étend de manière générale à tout équipement de visualisation déporté de la source et utilisé en environnement sévère, et notamment les équipements à balayage trame haute résolution (matriciels ou non).

Dans le domaine de l'aviation, différents types de câblage sont classiquement utilisés pour connecter des équipements électroniques. Il s'agit du câble coaxial ou du câble à paire(s) torsadée(s) généralement blindé.

Parmi les équipements de visualisation d'images vidéo, on distingue :
- les équipements à balayage cavalier (ou « stroke » selon la terminologie anglo-saxonne) dont la bande passante, relativement faible, est compatible avec un câblage classique ;
- les équipements à balayage trame basse résolution entrelacé (du type STANAG3350) dont la bande passante du signal analogique reste compatible avec un câblage classique ;
- les équipements à balayage trame haute résolution entrelacé ou non entrelacé nécessitant des précautions d'emploi eu égard aux fréquences et débits nécessaires à leur fonctionnement.

La mise en oeuvre d'un système à balayage trame haute résolution à bord d'un aéronef militaire nécessite une liaison vidéo entre la source vidéo située en soute et l'équipement de visualisation situé en cabine. Cette liaison vidéo doit être capable de véhiculer un débit d'information important (de l'ordre de 100 Mpixels/seconde) avec les contraintes suivantes :
- distance importante (en regard du débit) entre la source vidéo située en soute et l'équipement de visualisation situé en cabine ;
- nature de câblage imposée,
- présence de multiples prises de coupure (traversées de cloison, connecteur largable).

Parmi les câblages classiques, la connexion par câble coaxial n'est pas compatible avec la connectique d'un équipement de visualisation de type viseur de casque utilisant un système d'affichage haute résolution, notamment du fait de problèmes liés à la présence des prises de coupure et à la recherche de compacité de la connectique.

La connexion par paire torsadée blindée est alors la seule compatible avec la connectique d'un tel équipement de visualisation dans un environnement tel que celui des avions d'arme.

On recherche donc des solutions pour permettre d'assurer cette transmission haut débit entre la source et l'équipement de visualisation par l'intermédiaire d'un câblage à paires torsadées blindées.

Une première solution envisagée consiste à réaliser une transmission analogique différentielle. Toutefois, la transmission d'images vidéo analogiques haute résolution au travers d'un câble à paire torsadée dégrade la qualité de l'image restituée. En effet, l'impédance de ce type de câble n'est pas suffisamment constante sur toute la bande de fréquence utile sans qu'il existe de moyen dé compensation. Une telle solution n'est donc pas satisfaisante.

Une autre solution envisagée consiste à utiliser des liaisons numériques différentielles classiques telles que OpenLDI (« Open LVDS Digital Interface ») ou TMDS (« Transition Minimized Differential Signaling »). Mais cette solution n'est quant à elle pas compatible avec ce qui peut être employé à bord d'un aéronef militaire en terme de câblage pour garantir le débit et la récupération de l'information sans erreur. Ces protocoles ne sont effectivement pas suffisamment robustes en regard des retards relatifs autorisés entre les différents signaux de la liaison (skew inter paire).

Il existe donc un besoin pour une technique permettant d'assurer à bord d'un véhicule une transmission haut débit numérique d'un flux d'images vidéo entre une source vidéo et un équipement de visualisation déporté de la source, en particulier par le biais d'une liaison source-équipement compatible avec les contraintes imposées par une installation dans un véhicule militaire (avion d'arme, véhicule terrestre type char) telles que qualité du câble, connectique et réalisation du câblage (introduction de retard relatif ou « skew »).

On notera que le document US 6,058,288 concerne un système de divertissement à bord d'un avion de ligne, et vise donc une application totalement différente de celle de l'invention.

Par ailleurs, le système selon le document US 6,058,288 utilise une ligne de transmission entre la source et un moniteur sous la forme d'un lien « direct, individuel, point à point », notamment via un câble à paire torsadée. A ce titre, la ligne de transmission source/équipement de visualisation ne comprend qu'un seul canal.

On relèvera également que dans ce document US 6,058,288 on réalise un multiplexage pour transporter différents signaux (vidéo/audio) dans un même flux (ce flux étant ensuite transmis sur un seul canal), et qu'il ne s'agit donc pas là de réaliser un démultiplexage permettant de répartir un même flux sur différents canaux.

L'invention vise à répondre au besoin évoqué ci-dessus, et propose à cet effet, selon un premier aspect, un système de transmission numérique haut débit d'un flux d'images vidéo entre une source d'images vidéo et un équipement de visualisation embarqués à bord d'un véhicule, l'équipement de visualisation étant déporté de la source et le système de transmission comprenant une ligne de transmission vidéo reliant la source et l'équipement de visualisation, le système étant caractérisé en ce que la ligne de transmission est formée d'une pluralité de canaux de transmission et en ce que chaque canal véhicule une portion du flux vidéo provenant de la source au travers d'une liaison différentielle ayant comme support un câble à paire torsadée à impédance contrôlée, éventuellement blindée.

Certains aspects préférés, mais non limitatifs, de ce système sont les suivants :
- il comporte des moyens de démultiplexage adaptés pour répartir le flux vidéo provenant de la source sur un ensemble de canaux de ladite pluralité desdits canaux ;
- il comporte en outre des moyens de multiplexage adaptés pour combiner en un seul flux les données transférées sur ledit ensemble de canaux, de manière à reformer ledit flux vidéo pour transmission audit équipement ;
- chaque canal comporte des composants sérialiseur/désérialiseur intégrant un protocole de synchronisation automatique, sans transmission directe d'horloge ;
- il comporte en outre à l'émission des moyens d'encodage de la portion du flux vidéo destinée à être véhiculée sur chaque canal, en particulier un encodage réalisé selon le protocole 8B/10B ;
- les canaux sont regroupés par paire et la transmission sur un premier canal d'une paire est décalée dans le temps par rapport à la transmission sur un second canal de ladite paire ;
- la source fournit deux flux vidéo et la ligne de transmission relie la source à deux équipements de visualisation de manière adaptée pour que chacun de ces équipements reçoive l'un des flux provenant de la source ;
- la source est située en soute du véhicule et l'équipement de visualisation est un équipement à balayage trame haute résolution situé en cabine.

L'invention s'étend bien entendu à un véhicule, en particulier un aéronef ou un véhicule terrestre de type char, intégrant un système selon le premier aspect de l'invention.

Selon un autre aspect, l'invention concerne un procédé de transmission haut débit d'un flux d'images vidéo numérique entre une source d'images vidéo et un équipement de visualisation embarqués à bord d'un véhicule, l'équipement de visualisation étant déporté de la source et reliée à celle-ci par une ligne de transmission vidéo, caractérisé en ce qu'il comporte l'étape consistant à répartir le flux vidéo provenant de la source sur un ensemble de canaux de transmission formant ladite ligne de transmission, de manière à ce que chaque canal véhicule une portion du flux vidéo au travers d'une liaison différentielle ayant comme support un câble à paire torsadée à impédance contrôlée, éventuellement blindée

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma d'un système de transmission numérique haut débit conforme au premier aspect de l'invention ;
- la figure 2 est un schéma d'un mode de réalisation possible du système selon le premier aspect de l'invention ;
- la figure 3 est un chronogramme illustrant la répartition d'un flux vidéo sur quatre canaux.

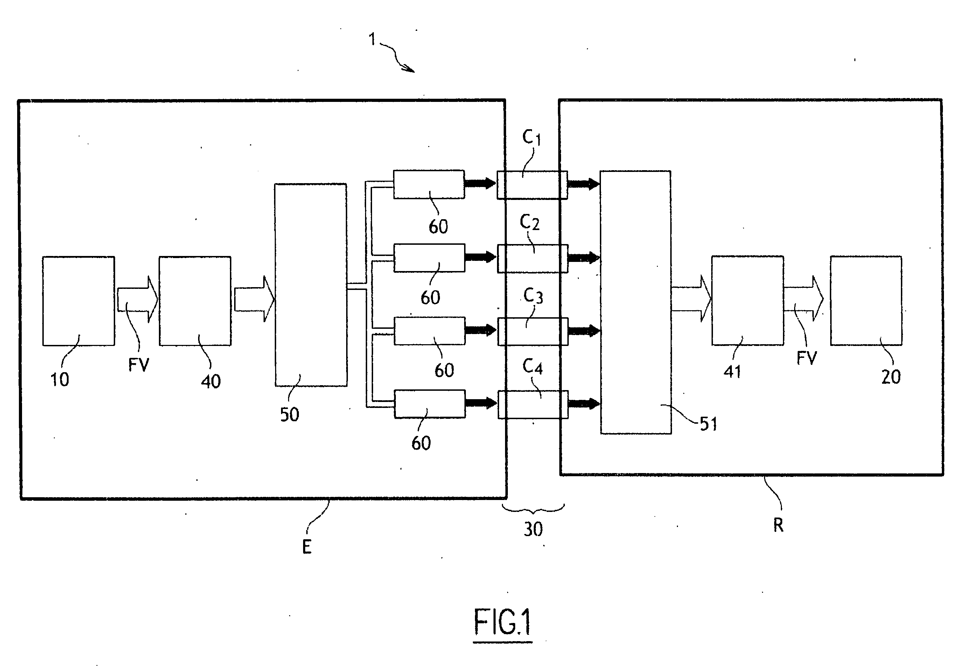

En référence à la figure 1, on a représenté un système de transmission numérique haut débit 1 d'un flux d'images vidéo entre une source d'images vidéo 10 et un équipement de visualisation 20.

La source 10 et l'équipement de visualisation 20 sont embarqués à bord d'un aéronef, typiquement un aéronef militaire.

L'invention n'est toutefois pas limitée à un tel aéronef, mais s'étend de manière plus générale à tout type de véhicule, en particulier militaire, dans lequel l'équipement de visualisation est déportée de la source, et notamment à un véhicule terrestre, par exemple un char.

L'équipement 20 est déporté de la source 10, et situé à une distance importante de celle-ci, en particulier au regard du débit.

Le système de transmission 1 comprend une ligne de transmission vidéo 30 reliant la source et l'équipement de visualisation.

La ligne de transmission est formée d'une pluralité de canaux de transmission C₁-C₄, chaque canal étant distribué (couche physique du système) par une liaison filaire cuivre différentielle ayant comme support un câble à paire torsadée à impédance contrôlée, éventuellement blindée. Chaque canal est ainsi compatible avec les exigences en matière de câblage avionique.

Dans un mode de réalisation de l'invention, on réalise plus précisément une transmission LVDS (« Low Voltage Differential Signaling ») sur paire torsadée. Ce mode de réalisation présente les avantages d'un faible bruit, d'une faible consommation et d'une bonne immunité.

Sur la figure 1, on désigne par émetteur E, l'ensemble des composants situés côté source 10 vis-à-vis de la ligne de transmission 30. L'émetteur E est typiquement logé dans la soute de l'aéronef. On désigne par récepteur R l'ensemble des composants situés côté équipement de visualisation 20 vis-à-vis de la ligne de transmission 30. Le récepteur R est typiquement logé dans la cabine de l'aéronef.

La source 10 délivre un flux vidéo numérique FV, par exemple sous la forme d'un flux vidéo au format DVI (selon l'acronyme anglo-saxon de « Digital Video Interactive » désignant la Vidéo Interactive Numérique) préalablement décodé et reconstitué.

Le flux FV fourni par la source 10 est traité par un encodeur de trames 40, classiquement connu en soi, adapté pour former à partir du flux vidéo FV des trames vidéo où chaque pixel est représenté par un caractère de 8 bits de long.

On notera que le récepteur R comporte quant à lui un décodeur 41 permettant de reconstituer un flux vidéo à partir de trames de données. Ce décodeur 41 réalise l'opération inverse de celle réalisée par l'encodeur de trames 40.

Le système 1 comporte également des moyens de démultiplexage 50 adaptés pour répartir le flux vidéo provenant de la source sur l'ensemble desdits canaux C₁-C₄.

En mettant en oeuvre un tel multiplexage, chaque canal ne véhicule qu'une portion du flux. Le débit brut par canal correspond effectivement au débit global réduit par un facteur N, N étant le nombre de canaux.

Le flux FV haut débit correspond par exemple à la transmission d'un flux vidéo monochrome haute résolution, du type flux de 50 images par seconde, chaque image disposant d'une haute résolution de 1024x1280 pixels. Un tel flux nécessite donc un haut débit de l'ordre de 100 Mega pixels par seconde (Mpixels/s).

Le nombre de canaux C₁-C₄ utilisés dépend du débit global nécessaire pour transmettre les images et du débit utile que peut supporter un canal. Dans le cadre de l'exemple ici présenté, chaque canal peut supporter un débit de 25 Mpixels/s, et l'on choisit donc d'utiliser 4 canaux, chaque canal véhiculant alors ¼ de l'information.

Le débit binaire global sur l'ensemble de la ligne 30 sera alors de 250 Mbits/s.

Le débit brut par canal est alors compatible avec le débit supporté par une liaison filaire au travers d'un câble à paire torsadée blindée d'un système viseur de casque.

On notera que le récepteur R comporte des moyens de multiplexage 51 permettant de reconstituer un flux vidéo haut débit. Ces moyens de multiplexage 51 combinent en un seul flux les données transférées sur l'ensemble des canaux, de manière à reformer ledit flux vidéo pour transmission à l'équipement de visualisation 20.

Les moyens de multiplexage 51 du récepteur R réalisent ainsi l'opération inverse des moyens de démultiplexage 50 de l'émetteur E.

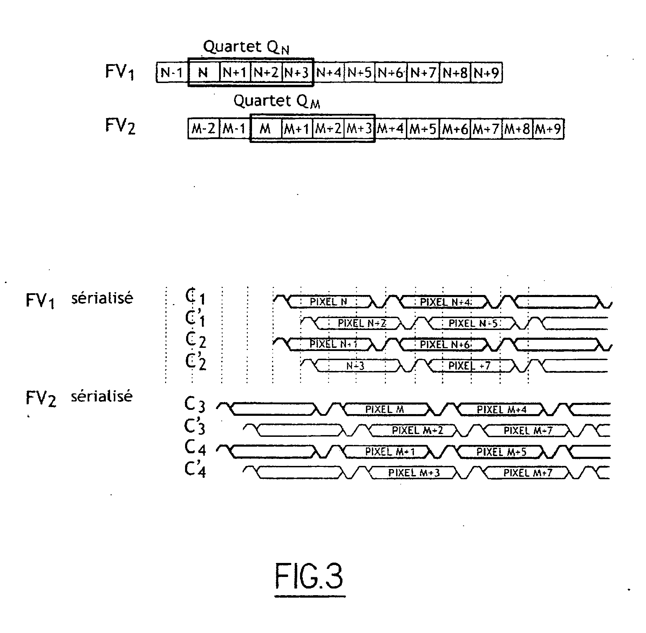

Un mode de mise en oeuvre du multiplexage sera décrit plus en détail par la suite, en relation avec la présentation d'un mode de réalisation possible du système selon l'invention, en particulier en regard de la figure 3.

En aval des moyens de multiplexage 50, pour chacune des voies démultiplexées en amont de chaque canal, le système comporte des moyens d'encodage à l'émission 60 adaptés pour symétriser la transmission et permettre la détection d'éventuelles erreurs.

Cet encodage définit le séquencement des informations. Un choix de codes de contrôle est réalisé pour garantir le maintien de la synchronisation des canaux et la récupération parfaite du rythme de la transmission.

Les moyens d'encodage 60 peuvent notamment être prévus pour que l'information utile transportée par chaque canal (par exemple 10 bits par pixel) soit encodée à l'émission selon le protocole 8B/10B par exemple. Cet encodage permet de maximiser les transitions, de balancer la ligne (répartition équitable des 0 et des 1), de transmettre des codes de contrôle, de détecter d'éventuelles erreurs de transmission.

Des codes de contrôle peuvent également être utilisés pour la transmission d'informations de blanking, de synchronisation horizontale et verticale, d'accrochage et de synchronisation du canal de transmission.

On détaille ci-après les mécanismes d'encodage et de décodage 8B/10B. Parmi les données formant la trame vidéo encodées selon 8B/10B, on distingue le groupe de codes des données D (256 caractères au total) et le groupe de codes des caractères spéciaux K (12 caractères spéciaux au total).

Les données non encodées comprennent 8 bits et sont notées Dx,y où x est la valeur décimale des bits les moins significatifs EDCBA et y la valeur décimale des bits les plus significatifs HGF. Par exemple la donnée 0x79, correspondant au code D25.3, est représentée de la façon suivante :

| | | | |
|---|---|---|---|
| | | | |
| D25.3 | HGF 011 | EDCBA 11001 | |
| | Y=3 | X=25 | |

Les données encodées, appelées groupe-codes, comprennent dix bits et sont notées /Dx,y/ où x est la valeur décimale des bits les moins significatifs abcdei et y la valeur décimale des bits les plus significatifs fghj.

Par exemple le caractère D25.3 est représenté par le groupe-code /D25.3/dont un des encodages possibles est le suivant :

| | | | |
|---|---|---|---|
| | | | |
| /D25.3/ | abcdei 100110 | fghj 1100 | |
| | | | |

Les bits sont transmis avec le bit a en tête dans l'ordre a, b, c, d, e, i, f, g, h, j.

L'encodage et le décodage 8B/10B fait en outre appel à une variable binaire appelée « RUNNING DISPARITY » permettant de balancer la ligne. On distingue une valeur positive RD+ et une valeur négative RD- dont l'utilité est de mémoriser la différence entre le nombre de 0 et le nombre de 1 transmis, et de faire en sorte que cette différence soit nulle. La valeur courante de cette variable permet de sélectionner quel groupe-code doit être transmis lorsque l'encodage nécessite de faire un choix entre deux codes asymétriques.

Les pixels visualisables sont encodés dans les combinaisons de « données valides » définies dans l'encodage (codes Dx.y).

Les zones de blanking et de synchronisation (horizontale HSYNC, verticale VSYNC) sont encodées dans les combinaisons de « caractères spéciaux valides» offertes par l'encodage (codes Kz.t) comme défini dans le tableau suivant (où I = Inactif, A = Actif).

| **BLANKING** | **HSYNC** | **VSYNC** | **DATA** | **Commentaires** |
|---|---|---|---|---|
| I | X | X | Dx.y | Transmission des pixels utiles de l'image |
| A | I | I | K28.5 | Transmission des périodes de blanking |
| A | A | I | K28.1 | Transmission des impulsions de synchronisation ligne (HSYNC) |
| A | X | A | K27.7 | Transmission des caractères d'alignement durant N premiers pixels suivant le front actif de VSYNC alignés sur un quartet |
| A | I | A | K28.2 | Transmission des impulsions de synchronisation trame (VSYNC actif seul) |
| A | A | A | K28.3 | Transmission des impulsions de synchronisation ligne pendant le retour trame (HSYNC et VSYNC actifs simultanément) |

L'insertion du caractère spécial K27.7 (caractère d'alignement) pendant les 4 pixels suivant le front descendant du signal VSYNC permet la détermination du réalignement des N paires BLVDS au niveau du récepteur. Dans le cas d'une répartition sur quatre flux, les N (avec N=4) codes K27.7 sont alignés sur le premier quartet suivant l'activation de VSYNC.

Le caractère spécial K28.5, présent pendant les périodes de blanking sert à la re-synchronisation rapide des désérialisateurs au niveau du récepteur.

Les caractères spéciaux sont choisis pour leur non-équilibrage de '0' et de '1' (propriété requise pour garantir le recouvrement d'horloge).

La table de décodage est la suivante.

| **DATA** | **BLANKING** | **HSYNC** | **VSYNC** | **Commentaires** |
|---|---|---|---|---|
| Dx.y | I | X | X | Pixel image |
| K28.5 | A | I | I | Période de Blanking |
| K28.1 | A | A | I | HSYNC |
| K27.7 | A | HSYNC_{N-1} | A | Code d'alignement |
| K28.2 | A | I | A | VSYNC actif seul |
| K28.3 | A | A | A | HSYNC et VSYNC actifs simultanément |

On notera que durant la phase d'alignement, on considère que VSYNC est actif et que HSYNC conserve son état précédent.

Chaque caractère encodé est ensuite sérialisé, transmis sur un canal, puis dé-sérialisé et décodé au niveau de l'équipement de visualisation.

Un sérialiseur et un désérialiseur assurent ainsi l'interface entre la couche de liaison et la couche physique au niveau de chaque canal.

Ces composants sérialiseur / désérialiseur intègrent avantageusement un protocole de synchronisation automatique, en particulier grâce à l'insertion de bits START et STOP permettant de délimiter chaque caractère.

A titre d'exemple, ces composants peuvent être des composants COTS (« commercial off-the-shelf ») répondant à la norme BLVDS (c'est-à-dire norme Bus LVDS, issue de la norme LVDS - Low Voltage Differential Signaling - et présentant une marge d'immunité au bruit accrue).

On notera que des sérialiseurs / désérialiseurs réalisés en logique programmable peuvent également être utilisés.

Les données transférées sur chaque canal peuvent ainsi être encapsulées dans des caractères de 12 bits répartis comme décrit ci-après. Cette répartition correspond au format BLVDS 10 bits.

Le tableau ci-dessous représente l'ordre de présentation des bits dans le flux sérialisé.

| Temps bit | 1 | 2 | 3 | 4 | 5 | 6 | 7 | 8 | 9 | 10 | 11 | 12 |
|---|---|---|---|---|---|---|---|---|---|---|---|---|
| Groupe -code | | a | b | c | d | e | i | f | g | h | j | |
| | | B | | | | | | | | | LSB | |
| Data bit | ST | D0 | D1 | D2 | D3 | D4 | D5 | D6 | D7 | D8 | D9 | SP |

Pour chaque caractère :
- le bit 1 correspond au bit START (ST) et est toujours à l'état Haut ;
- les bits 2 à 11 correspondent à la charge utile (« payload ») et contiennent l'information pixel encodée (groupe-codes) ;
   Le « MSB » (Most Significant Bit) est positionné au bit 2 et correspond au bit a du groupe-code. Le « LSB » (Least Significant Bit) est positionné au bit 11, et correspond au bit j du groupe-code.
- le bit 12 correspond au bit STOP (SP) et est toujours à l'état Bas.

La mise en oeuvre de la norme BLVDS permet à la liaison vidéo faisant le lien entre la source vidéo située en soute et l'équipement de visualisation situé en cabine d'être une liaison numérique multiplexée sans transmission directe d'horloge. L'horloge est alors extraite du signal à la réception.

Le fait de ne pas transmettre d'horloge séparée (comme cela est réalisé à contrario en TMDS par exemple) est avantageux en ce qu'il permet d'être robuste vis à vis de la réalisation du câblage avion.

Dans le cadre de cette mise en oeuvre, le retard relatif (« skew ») admissible entre canal est effectivement égal à la durée de transmission d'un caractère (soit la durée de transmission de 10 bits).

A titre de comparaison, en TMDS, le retard relatif admissible est d'uniquement 1 bit, soit 10 fois moins.

La détermination du retard des canaux les uns par rapport aux autres (« skew ») est réalisée au niveau du récepteur R grâce à des codes de contrôle particuliers, et permet au récepteur de réaligner les canaux de telle sorte que les données sont présentées à l'affichage par l'équipement de visualisation dans l'ordre dans lequel elles ont été émises.

Le dimensionnement des moyens de démulitplexage/mulitplexage répond aux règles suivantes d'établissement du nombre de canaux nécessaires:
- le nombre de pixels par ligne HorizontalTotal doit être un multiple du nombre de canaux Ncanaux
   soit : HorizontalTotal %Ncanaux = 0 (% représente le reste de la division euclidienne);
- le débit binaire doit être inférieur à la capacité du canal, soit : Ncanaux ≥ Fpixel x12 / capacité du canal ;
- le débit binaire doit respecter la gamme de fréquence d'entrée des sérialisateurs, soit : Fmin <Fpixel/Ncanaux< Fmax ;
- le nombre de slots temporels doit permettre de véhiculer autant de flux que de récepteurs : Nslot = Nvoies x Ncanaux / 2 et Ncanaux %2=0 ;
- la sensibilité au skew inter-canal est proportionnelle au nombre de slots Skew MAX admissible = Tpixel/Ncanaux.

A titre d'exemple, on choisit Fmin = 20 MHz, Fmax = 66 MHz, Fpixel = 88.5 MHz, Capacité du canal : 280 Mbits/s, HorizontalTotal = 1600 pixels, Nvoies=2. Il en découle
Nombre de canaux = 4
Nombres de slots temporels = 4
Skew max admissible : ¼
Tpixel = 2.8 ns

Selon un mode de réalisation possible de l'invention, on optimise les échanges d'information entre couche transport et couche liaison de manière à réduire les liaisons électriques.

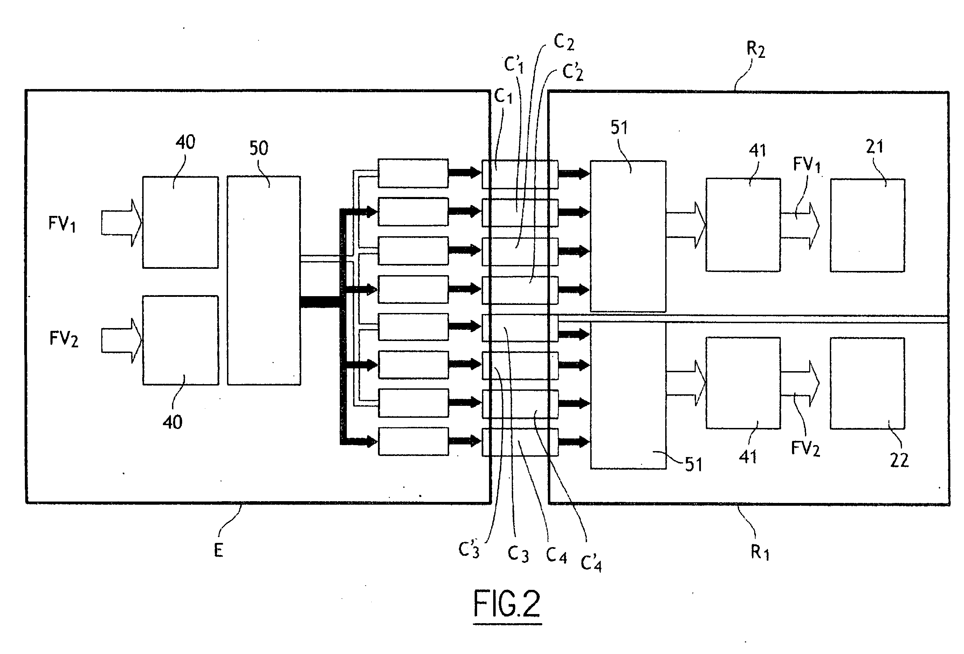

Par exemple, pour une liaison sur 4 canaux, les canaux sont regroupés deux par deux comme cela est illustré sur la figure 2.

En sortie des moyens de démultiplexage 50, une première voie est ainsi formée des canaux C₁, C₂, C₃ et C₄ tandis qu'une deuxième voie est formée des canaux C'₁, C'₂, C'₃ et C'₄. Et ces différents canaux sont regroupés deux par deux : C₁ et C'₁ ; C₂ et C'₂ ; C₃ et C'₃ ; C₄ et C'₄.

Cette répartition permet de plus d'étendre la configuration décrite à deux flux numériques pour deux systèmes de visualisation indépendants sans pour autant doubler les ressources matérielles nécessaires (outre les canaux eux-mêmes). Ce mode de réalisation avantageux du système selon l'invention est illustré sur la figure 2, et consiste à multiplexer deux flux vidéo FV1, FV2 sur quatre canaux chacun, de manière à distribuer des images vidéo différentes vers deux équipements de visualisation 21, 22 situés en cabine.

Ce mode de réalisation s'avère avantageux dans la mesure où, notamment dans les aéronefs militaires, on fournit des informations différentes aux différents utilisateurs de système viseur de casque présents en cabine.

Cette répartition peut en outre être utilisé pour transmettre une pluralité de flux vidéo vers un même équipement de visualisation ; par exemple pour transmettre trois flux monochromes vers un équipement de visualisation, en particulier des flux correspondant chacun à une composante primaire (par exemple composante Rouge (R), composante Verte (G) et composante Bleus (B)) d'un flux vidéo couleur.

On notera à ce propos que le document US 5,974, 464 traite de la transmission des flux monochrome R, G et B. Ce document propose à cet effet un système de transmission constitué de trois lignes de données et d'une ligne d'horloge, dans lequel chaque ligne de données est constituée d'un seul canal, par exemple un câble à paire torsadée, et transmet un flux vidéo monochrome (respectivement R, G et B).

Le document US 5,974, 464 propose ainsi de transmettre un flux vidéo (monochrome) sur une ligne de transmission constituée d'un seul canal.

On constatera que la présente invention se distingue ainsi de ce document US 5,974, 464 notamment en ce qu'elle propose une ligne de transmission d'un flux vidéo monochrome sous la forme d'une pluralité de canaux, chaque flux vidéo monochrome étant démultiplexé pour être réparti sur les différents canaux d'une même ligne.

La discussion suivante traite plus particulièrement du mode de réalisation avantageux présenté ci-dessus. On notera toutefois que cette discussion s'applique de manière plus générale au démultiplexage conforme à l'invention d'un flux vidéo sur différents canaux.

Comme cela est apparent sur le chronogramme de la figure 3, chaque flux vidéo est multiplexé sur quatre canaux.

La figure 3 montre plus précisément la chronologie et la répartition des flux de données depuis les flux vidéo en entrée jusqu'à la sérialisation. Bien entendu, ce chronogramme est purement fonctionnel et ne serait tenir compte des éventuels délais de latence qui peuvent être introduits par les choix de conception.

Une image source est découpée en bloc de quatre pixels consécutifs du rang N au rang N+3 pour le flux FV1 (et du rang M au rang M+3 pour le flux FV2), avec N (respectivement M) multiple de 4.

Chaque bloc de pixels est distribué en ordre sur les quatre canaux (canal 0 : C₁ ; canal 1 : C₂ ; canal 2 : C'₁ ; canal 3 : C'₂) : pixel de rang N sur le canal 0 jusqu'au pixel de rang N+3 sur le canal 3.

Le pixel de rang N=0 correspond au premier pixel d'une trame marqué par l'activation du top de synchronisation verticale.

Les canaux sont appairés deux à deux, sous forme de deux canaux pairs (canaux 0 et 2 : C₁ et C'₁) et deux canaux impairs (canaux 1 et 3 : C₂ et C'₂).

Chaque paire de canal vidéo est décalée dans le temps de telle sorte que le début de transmission des pixels sur les paires de canaux soit équi-réparti sur une période de 4 pixels.

On a ainsi représenté sur la figure 3, le flux FV1 sérialisé et transmis sur la voie 1 formé des paires de canaux C₁, C'₁ et C₂, C'₂.

De manière similaire, on a représenté le flux FV2 sérialisé et transmis sur la voie 2 formé des paires de canaux C₃, C'₃ et C₄, C'₄.

La phase entre les deux voies (matérialisée par un décalage des débuts de trames des deux flux) est quelconque. Les deux voies sont synchrones l'une de l'autre (fréquences pixel identiques).

La voie 1 est récupérée au niveau d'un récepteur R1 pour traitement de reconstitution du flux FV1 et transmission dudit flux FV1 pour affichage sur l'équipement 21 ; la voie 2 est récupérée au niveau d'un récepteur R2 pour traitement de reconstitution du flux FV2 et transmission dudit flux FV2 pour affichage sur l'équipement 22.

On note que les fronts montant/descendant des horloges d'émission sont utilisés pour piloter l'envoi séquentiel des flux FV1 et FV2.

On précise enfin qu'à l'établissement de la liaison, une salve prédéfinie de caractères peut être émise afin de réaliser la synchronisation des équipements. Cette salve peut consister en l'envoi d'une suite finie de caractères, par exemple 1024 caractères de valeur H1111100000L.

On notera que cette salve peut en outre être envoyée en cours de transmission de la trame vidéo en cas de détection par l'émetteur d'une perte de synchronisation du récepteur.

Bien entendu, l'invention s'étend également à un véhicule, en particulier un véhicule militaire, par exemple un aéronef ou un véhicule terrestre, intégrant à un système de transmission selon le premier aspect de l'invention.

## Revendications

1. Système (1) de transmission numérique haut débit d'un flux d'images vidéo (FV, FV1, FV2) entre une source d'images vidéo (10) et un équipement de visualisation (20, 21, 22) embarqués à bord d'un véhicule, l'équipement de visualisation (20, 21, 22) étant déporté de la source (10) et le système de transmission comprenant une ligne de transmission vidéo (30) reliant la source et l'équipement de visualisation, le système étant **caractérisé en ce que** la ligne de transmission (30) est formée d'une pluralité de canaux de transmission (C₁-C_{N} ; C₁-C₄ ; C'₁-C'₄), chaque canal ayant comme support un câble à paire torsadée, et **en ce qu'**il comporte des moyens de démultiplexage (50) adaptés pour répartir le flux vidéo (FV, FV1, FV2) provenant de la source (10) sur un ensemble de canaux de ladite pluralité de canaux (C₁-C_{N}; C₁-C₄; C'₁-C'₄), de sorte que chaque canal dudit ensemble véhicule une portion du flux vidéo.

2. Système selon la revendication précédente, dans lequel chaque canal véhicule une portion du flux vidéo au travers d'une liaison différentielle ayant comme support un câble à paire torsadée à impédance contrôlée, éventuellement blindée.

3. Système selon l'une des revendications précédentes, **caractérisé en ce qu'**il comporte en outre des moyens de multiplexage (50, 51, 52) adaptés pour combiner en un seul flux les données transférées sur ledit ensemble de canaux, de manière à reformer ledit flux vidéo pour transmission audit équipement.

4. Système selon l'une des revendications précédentes, **caractérisé en ce que** chaque canal comporte des composants sérialiseur/désérialiseur intégrant un protocole de synchronisation automatique, sans transmission directe d'horloge.

5. Système selon l'une des revendications précédentes, **caractérisé en ce qu'**il comporte en outre à l'émission des moyens d'encodage (60) de la portion du flux vidéo destinée à être véhiculée sur chaque canal, en particulier un encodage réalisé selon le protocole 8B/10B.

6. Système selon l'une des revendications précédentes, **caractérisé en ce que** les canaux sont regroupés par paire et **en ce que** la transmission sur un premier canal d'une paire est décalée dans le temps par rapport à la transmission sur un second canal de ladite paire.

7. Système selon l'une des revendications précédentes, **caractérisé en ce que** la source fournit deux flux vidéo (FV1, FV2) et **en ce que** la ligne de transmission relie la source à deux équipements de visualisation (21, 22) de manière adaptée pour que chacun de ces équipements reçoive l'un des flux provenant de la source.

8. Système selon l'une des revendications précédentes, **caractérisé en ce que** la source est située en soute du véhicule et **en ce que** l'équipement de visualisation est un équipement à balayage trame haute résolution situé en cabine.

9. Véhicule, en particulier un aéronef ou un véhicule terrestre, intégrant un système selon l'une quelconque des revendications précédentes.

10. Procédé de transmission haut débit d'un flux d'images vidéo numérique (FV, FV1, FV2) entre une source d'images vidéo (10) et un équipement de visualisation (20, 21, 22) embarqués à bord d'un véhicule, l'équipement de visualisation (20, 21, 22) étant déporté de la source (10) et reliée à celle-ci par une ligne de transmission vidéo (30), **caractérisé en ce que** le flux vidéo (FV, FV1, FV2) provenant de la source est démultiplexé sur un ensemble de canaux de transmission (C₁-C_{N}; C₁-C₄ ; C'₁-C'₄) appartenant à ladite ligne de transmission et ayant chacun comme support un câble à paire torsadée, de manière à ce que chaque canal véhicule une portion du flux vidéo.

11. Procédé selon la revendication précédente, dans lequel chaque canal véhicule une portion du flux vidéo au travers d'une liaison différentielle ayant comme support un câble à paire torsadée à impédance contrôlée, éventuellement blindée.

12. Procédé selon la revendication précédente, **caractérisé en ce qu'**il comporte en outre l'étape consistant à multiplexer les données transférées sur l'ensemble des canaux de transmission (C₁-C_{N} ; C₁-C₄ ; C'₁-C'₄) pour les combiner en un seul flux, de manière à reformer ainsi ledit flux vidéo pour transmission audit équipement.

13. Procédé selon l'une des trois revendications précédentes, **caractérisé en ce que** la transmission sur un canal est réalisée selon un protocole de synchronisation automatique, sans transmission directe d'horloge.

14. Procédé selon l'une des quatre revendications précédentes, **caractérisé en ce qu'**il comporte l'étape consistant à encoder à l'émission la portion du flux vidéo devant être véhiculée sur chaque canal, en particulier selon le protocole 8B/10B.

15. Procédé selon l'une des cinq revendications précédentes, **caractérisé en ce qu'**il comporte l'étape consistant à regrouper les canaux par paire, et à décaler la transmission sur un premier canal d'une paire par rapport à la transmission sur un second canal de ladite paire.

16. Procédé selon l'une des six revendications précédentes, **caractérisé en ce qu'**il comporte une étape de synchronisation consistant à émettre une salve prédéfinie de caractères.

## Claims

1. System (1) for high-speed digital transmission of a video image stream (FV, FV1, FV2) between a video image source (10) and a display device (20, 21, 22) on-board a vehicle, the display device (20, 21, 22) being remote from the source (10) and the transmission system comprising a video transmission line (30) connecting the source and the display device, the system being **characterised in that** the transmission line (30) is formed of a plurality of transmission channels (C₁-C_{N}; C₁-C₄; C'₁-C'₄), each channel having as medium a twisted-pair cable, and **in that** it comprises demultiplexing means (50) adapted to distributing the video stream (FV, FV1, FV2) from the source. (10) over a set of channels of said plurality of channels (C₁-C_{N}; C₁-C₄; C'₁-C'₄), so that each channel of said set conveys a portion of the video stream.

2. System according to the preceding claim, wherein each channel conveys a portion of the video stream via a differential link having as medium a twisted-pair cable with controlled impedance, optionally shielded.

3. System according to one of the preceding claims, **characterised in that** it moreover comprises multiplexing means (50, 51, 52) adapted to combine into a single stream the data transferred on said set of channels, so as to reform said video stream for transmission to said device.

4. System according to one of the preceding claims, **characterised in that** each channel comprises serialiser/deserialiser components integrating an automatic synchronisation protocol, without direct clock transmission.

5. System according to one of the preceding claims, **characterised in that** it moreover comprises at emission means of encoding (60) the portion of the video stream intended to be conveyed, on each channel, in particular an encoding performed according to the protocol 8B/10B.

6. System according to one of the preceding claims, **characterised in that** the channels are grouped together by pair and **in that** the transmission on a first channel of a pair is time shifted with respect to the transmission on a second channel of said pair.

7. System according to one of the preceding claims, **characterised in that** the source provides two video streams (FV1, FV2) and **in that** the transmission line connects the source to two display devices (21, 22) in an appropriate manner so that each of said devices receives one of the streams from the source.

8. System according to one of the preceding claims, **characterised in that** the source is situated in the hold of the vehicle and **in that** the display device is a high resolution raster scan device situated in the cockpit.

9. Vehicle, in particular an aircraft or a land vehicle, integrating a system according to any of the preceding claims.

10. Method for high-speed transmission of a digital video image stream (FV, FV1, FV2) between a video image source (10) and a display device (20, 21, 22) on-board a vehicle, the display device (20, 21, 22) being remote from the source (10) and connected thereto by a video transmission line (30), **characterised in that** the video stream (FV, FV1, FV2) from the source is demultiplexed over a set of transmission channels (C₁-C_{N}; C₁-C₄; C'₁-C'₄) belonging to said transmission line and each having as medium a twisted-pair cable, so that each channel conveys a portion of the video stream.

11. Method according to the preceding claim, wherein each channel conveys a portion of the video stream via a differential link having as medium a twisted-pair cable with controlled impedance, optionally shielded.

12. Method according to the preceding claim, **characterised in that** it moreover comprises the step consisting in multiplexing the data transferred onto the set of transmission channels (C₁-C_{N}; C₁-C₄; C'₁-C'₄) to combine them in a single stream, so as to thereby reform said video stream for transmission to said device.

13. Method according to one of the three preceding claims, **characterised in that** the transmission on a channel is performed according to an automatic synchronisation protocol, without direct clock transmission.

14. Method according to one of the four preceding claims, **characterised in that** it comprises the step consisting in encoding at emission the portion of the video stream that has to be conveyed on each channel, in particular according to the protocol 8B/10B.

15. Method according to one of the five preceding claims, **characterised in that** it comprises the step consisting in grouping together the channels by pair, and in shifting the transmission on a first channel of a pair with respect to the transmission on a second channel of said pair.

16. Method according to one of the six preceding claims, **characterised in that** it comprises a synchronisation step consisting in transmitting a predefined burst of characters.

## Patentansprüche

1. System (1) zur digitalen Hochgeschwindigkeitsübertragung eines Stroms von Videobildern (FV, FV1, FV2) zwischen einer Quelle für Videobilder (10) und einer Anzeigeeinrichtung (20, 21, 22), die in einem Fahrzeug mitgeführt werden, wobei die Anzeigeeinrichtung (20, 21, 22) von der Quelle (10) abgesetzt ist und das Übertragungssystem eine Videoübertragungsleitung (30) umfasst, die die Quelle und die Anzeigeeinrichtung verbindet, wobei das System **dadurch gekennzeichnet ist, dass** die Übertragungsleitung (30) durch mehrere Übertragungskanäle (C₁-C_{N}; C₁-C₄; C'₁-C'₄) gebildet wird, wobei jeder Kanal als Träger ein Kabel mit Paarverdrillung hat, und dadurch, dass es ein Mittel zum Demultiplexen (50) umfasst, das dafür eingerichtet ist, den von der Quelle (10) kommenden Videostrom (FV, FV1, FV2) auf eine Gruppe von Kanälen aus den mehreren Kanälen (C₁-C_{N}; C₁-C₄; C'₁-C'₄) zu verteilen, und dies derart, dass jeder Kanal aus der Gruppe einen Teil des Videostroms transportiert.

2. System nach dem vorhergehenden Anspruch, bei dem jeder Kanal einen Teil des Videostroms über eine differentielle Verbindung transportiert, die als Träger ein Kabel mit Paarverdrillung und mit einer eingestellten Impedanz hat, das eventuell abgeschirmt ist.

3. System nach einem der vorhergehenden Ansprüche, **dadurch gekennzeichnet, dass** es außerdem ein Mittel zum Multiplexen (50, 51, 52) umfasst, das dafür eingerichtet ist, die Daten, die über die Gruppe von Kanälen übertragen werden, in einen einzigen Strom zu kombinieren, und dies derart, dass der Videostrom zur Übertragung an die Einrichtung wiederhergestellt wird.

4. System nach einem der vorhergehenden Ansprüche, **dadurch gekennzeichnet, dass** jeder Kanal Komponenten zur seriell-parallel/parallel-seriell Umsetzung umfasst, die ein Protokoll zur automatischen Synchronisation ohne das direkte Übertragen eines Takts umfassen.

5. System nach einem der vorhergehenden Ansprüche, **dadurch gekennzeichnet, dass** es außerdem für das Senden ein Codierungsmittel (60) für den Teil des Videostroms umfasst, der für die Übertragung auf jedem der Kanäle vorgesehen ist, wobei dies insbesondere eine Codierung ist, die gemäß dem Protokoll 8B/10B ausgeführt wird.

6. System nach einem der vorhergehenden Ansprüche, **dadurch gekennzeichnet, dass** die Kanäle paarweise gruppiert sind und dadurch, dass die Übertragung auf einem ersten Kanal eines Paares relativ zur Übertragung auf einem zweiten Kanal des Paares zeitlich verschoben ist.

7. System nach einem der vorhergehenden Ansprüche, **dadurch gekennzeichnet, dass** die Quelle zwei Videoströme (FV1, FV2) liefert und dadurch, dass die Übertragungsleitung die Quelle mit zwei Anzeigeeinrichtungen (21, 22) verbindet, wobei dies so eingerichtet ist, dass jede der Einrichtungen einen der von der Quelle kommenden Ströme empfängt.

8. System nach einem der vorhergehenden Ansprüche, **dadurch gekennzeichnet, dass** die Quelle sich im Gepäckraum des Fahrzeugs befindet und dadurch, dass die Anzeigeeinrichtung eine hochauflösende Teilbildabtastungs-Einrichtung ist, die sich in der Kabine befindet.

9. Fahrzeug, insbesondere ein Luftfahrzeug oder ein Landfahrzeug, das ein System gemäß einem der vorhergehenden Ansprüche integriert.

10. Verfahren zur Hochgeschwindigkeitsübertragung eines digitalen Stroms von Videobildern (FV, FV1, FV2) zwischen einer Quelle für Videobilder (10) und einer Anzeigeeinrichtung (20, 21, 22), die in einem Fahrzeug mitgeführt werden, wobei die Anzeigeeinrichtung (20, 21, 22) von der Quelle (10) abgesetzt und mit dieser über eine Videoübertragungsleitung (30) verbunden ist, **dadurch gekennzeichnet ist, dass** der von der Quelle kommende Videostrom (FV, FV1, FV2) auf eine Gruppe von Übertragungskanälen (C₁-C_{N}; C₁-C₄; C'₁-C'₄) demultiplexiert wird, die zu der Übertragungsleitung gehören und von denen jeder als Träger ein Kabel mit Paarverdrillung hat, und dies derart, dass jeder Kanal einen Teil des Videostroms transportiert.

11. Verfahren nach dem vorhergehenden Anspruch, bei dem jeder Kanal einen Teil des Videostroms über eine differentielle Verbindung transportiert, die als Träger ein Kabel mit Paarverdrillung und mit einer eingestellten Impedanz hat, das eventuell abgeschirmt ist.

12. Verfahren nach dem vorhergehenden Anspruch, **dadurch gekennzeichnet, dass** es außerdem einen Schritt umfasst, der darin besteht, die Daten zu multiplexieren, die über die Gruppe von Übertragungskanälen (C₁-C_{N}; C₁-C₄; C'₁-C'₄) übertragen werden, um sie in einen einzigen Strom zu kombinieren, und dies so, dass dadurch der Videostrom zur Übertragung zur Einrichtung wiederhergestellt wird.

13. Verfahren nach einem der drei vorhergehenden Ansprüche, **dadurch gekennzeichnet, dass** die Übertragung auf einem Kanal gemäß einem Protokoll zur automatischen Synchronisation ausgeführt wird, ohne das direkte Übertragen eines Takts.

14. Verfahren nach einem der vier vorhergehenden Ansprüche, **dadurch gekennzeichnet, dass** es einen Schritt umfasst, der darin besteht, beim Senden den Teil des Videostroms zu codieren, der auf jedem der Kanäle transportiert werden muss, und dies insbesondere gemäß dem Protokoll 8B/10B.

15. Verfahren nach einem der fünf vorhergehenden Ansprüche, **dadurch gekennzeichnet, dass** es einen Schritt umfasst, der darin besteht, die Kanäle paarweise zu gruppieren und die Übertragung auf einem ersten Kanal eines Paares relativ zur Übertragung auf einem zweiten Kanal des Paares zeitlich zu verschieben.

16. Verfahren nach einem der sechs vorhergehenden Ansprüche, **dadurch gekennzeichnet, dass** es einen Synchronisationsschritt umfasst, der darin besteht, eine vorgegebene Folge von Zeichen zu senden.
